# EUROPÄISCHE PATENTSCHRIFT

(11) **EP 3 290 259 B1**
(45) Veröffentlichungstag und Bekanntmachung des Hinweises auf die Patenterteilung: **03.04.2019**
(21) Anmeldenummer: 16186143.0
(22) Anmeldetag: 29.08.2016
(51) Int. Cl.: B60N 2/12

(54) **LÄNGSEINSTELLER FÜR EINEN FAHRZEUGSITZ UND FAHRZEUGSITZ**
LENGTH ADJUSTER FOR A VEHICLE SEAT AND VEHICLE SEAT
DISPOSITIF DE REGLAGE EN LONGUEUR DE SIEGE DE VEHICULE ET SIEGE DE VEHICULE

(43) Veröffentlichungstag der Anmeldung: 07.03.2018
(73) Patentinhaber: Adient Luxembourg Holding S.à r.l., 1855 Luxembourg (LU)
(72) Erfinder: UTZINGER, Karl, 66919 Weselberg (DE); MIZERSKI, Piotr, 67657 Kaiserslautern (DE); SPRENGER, Erik, 42929 Wermelskirchen (DE); ZACHARIAS, Michael, 42799 Leichlingen (DE)
(74) Vertreter: Liedhegener, Ralf

(56) Entgegenhaltungen:
- WO-A1-03/062012
- WO-A1-2004/089683
- US-A- 4 844 542
- US-A- 5 769 493

## Beschreibung

Die Erfindung betrifft einen Längseinsteller mit den Merkmalen des Oberbegriffs des Anspruchs 1 sowie einen Fahrzeugsitz.

### Stand der Technik

Im Stand der Technik sind verschiedene Easy-Entry-Systeme bekannt, welche einen erleichterten Einstieg in eine zweite Sitzreihe eines Fahrzeuges ermöglichen. Das Easy-Entry-System ist durch einen Entriegelungshebel, welcher üblicherweise an einer Rückenlehne des Fahrzeugsitzes angeordnet ist, betätigbar, wodurch die Rückenlehne des Fahrzeugsitzes aus einem Einstiegsbereich schwenkt. Ist der Fahrzeugsitz auf Schienen angeordnet, kann der Fahrzeugsitz bei Betätigung des Entriegelungshebels zusätzlich oder alternativ in Fahrtrichtung aus dem Einstiegsbereich heraus verschiebbar sein.

In an sich bekannter Weise ermöglicht eine Easy-Entry-Verstellvorrichtung für einen Fahrzeugsitz eine Verstellbarkeit des Fahrzeugsitzes zwischen einer Gebrauchsposition und einer Easy-Entry-Position. Eine solche Verstellbarkeit ist insbesondere für solche Fahrzeuge besonders vorteilhaft, die lediglich eine Türe pro Fahrzeugseite haben. Beim Überführen des Fahrzeugsitzes von der Gebrauchsposition in die Easy-Entry-Position wird sowohl ein Lehnenbeschlag der Verstellvorrichtung, als auch eine Sitzlängsverriegelung der Verstellvorrichtung gelöst. Das Lösen des Lehnenbeschlags ermöglicht ein Verschwenken der Sitzlehne des Fahrzeugsitzes nach vorn in Richtung eines Sitzteils des Fahrzeugsitzes, während das Lösen der Sitzlängsverriegelung ein Vorschieben des gesamten Fahrzeugsitzes in Fahrtrichtung ermöglicht. Ein Fahrzeuginsasse erlangt somit Zugang zu den Rücksitzen des Fahrzeugs.

Aus der DE 102 02 179 A1, sowie der hieraus hervorgegangenen WO 03/062012 A1, ist allgemein ein gattungsgemäßer Längseinsteller für einen Fahrzeugsitz bekannt, welcher eine Memory-Vorrichtung zur Erfassung einer relativen Sitzlängsverschiebung aufweist. Die Memory-Vorrichtung ist hierbei in einem inneren, zwischen einer Oberschiene und einer Unterschiene gebildeten, Bauraum angeordnet und mit der Oberschiene verbunden. Die Memory-Vorrichtung weist ein mit der Unterschiene in Eingriff bringbares Sperrelement auf, welches im Falle einer Betätigung der Sperrfunktion sämtliche auf das Sperrelement wirkende Kräfte in die Memory-Vorrichtung einleitet. Zum Abstoppen des Fahrzeugsitzes wird das Sperrelement in Eingriff in ein Lochbild der Unterschiene oder in Eingriff in ein an der Unterschiene befestigtes Bauteil, welches ein Lochbild besitzt, gebracht.

Es sind ebenso Memory-Vorrichtungen bekannt, bei denen ein in der Unterschiene in Längsrichtung verschiebliches aus mehreren Bauteilen bestehendes Abstoppelement geführt ist, welches an einer wiederholt einzunehmenden Position in der Unterschiene abgelegt wird. Entweder greift das Abstoppelement direkt in ein Lochbild der Unterschiene ein, oder es greift in ein mit der Unterschiene verbundenen, mit einem Lochbild versehenen Zusatzbauteil ein. Der Fahrzeugsitz ist somit durch ein Anstoßen und Abstützen an diesem an der wiederholt einzunehmenden Position abgelegten Abstoppelement abstoppbar.

Aus der WO 2004/089683 A1 ist eine Fahrzeugsitzanordnung mit einem Sitz, der mit mindestens einer Schiene zur Längsbewegung entlang der Schiene zwischen einer hintersten Position und einer vordersten Position gleitend verbunden ist, bekannt. Ein Schienenrastmechanismus ist vorgesehen, der zum Zusammenwirken mit der Schiene an einem Sitzkissen montiert ist, um den Sitz an einer gewählten Soll-Längsposition entlang der Schiene rastend zu lokalisieren, und einem Schienennachführmechanismus, der am Sitzkissen zum Zusammenwirken mit der Schiene montiert ist, um die Längsverschiebung des Sitzes entlang der Schiene aus einer vorgewählten Soll-Längsposition des Sitzes auf der Schiene nachzuführen. Eine Erfassung der Längsverschiebung des Sitzes erfolgt mittels eines Zahnrades und einer Zahnstange, alternativ mittels eines Reibrads in Wirkverbindung mit einer Reibfläche. Wobei der Rastmechanismus ein Rastmittel aufweist, das gezielt mit einem Lochbild der Unterschiene in Eingriff bringbar ist, um den Sitz in der gewählten Soll-Längsposition zu verrasten.

Aus der US 4 844 542 A sowie der US 5 769 493 A sind jeweils weitere gattungsgemäße Fahrzeugsitzanordnungen bekannt, welche mittels eines Zahnrades in Verbindung mit einer Zahnstange, sowie unter Einsatz eines in eine untere Sitzschiene eingreifendes Rastelements funktioniert.

### Aufgabe

Der Erfindung liegt die Aufgabe zu Grunde, einen Längseinsteller der eingangs genannten Art zu verbessern, insbesondere einen Längseinsteller mit einer außerhalb des Sitzschienenpaares angeordneten Memory-Vorrichtung bereitzustellen, welche nicht auf eine innerhalb des Sitzschienenpaares angeordnete Verriegelung wirkt, sowie einen entsprechenden Fahrzeugsitz bereitzustellen.

### Lösung

Diese Aufgabe wird erfindungsgemäß gelöst durch einen Längseinsteller für einen ein Sitzteil und eine Lehne aufweisenden Fahrzeugsitz, insbesondere einen Kraftfahrzeugsitz. Der Längseinsteller weist eine erste Sitzschiene und eine zweite Sitzschiene auf, wobei die erste Sitzschiene relativ zur zweiten Sitzschiene in einer Längsrichtung verschiebbar ist. Ferner ist eine der ersten Sitzschiene zugeordnete und mit der zweiten Sitzschiene zusammenwirkende Memory-Vorrichtung vorgesehen, wobei eine von einer als Memory-Position bezeichneten Sitzlängsposition ausgehende Relativbewegung zwischen der ersten Sitzschiene und der zweiten Sitzschiene mittels eines Reibrades der Memory-Vorrichtung erfassbar ist, wobei das Reibrad hierzu eine relativ zur Memory-Vorrichtung bewegbare Kontaktfläche kontaktiert und abfährt. Ferner ist das Reibrad der Memory-Vorrichtung bei einem Wiedererreichen der Memory-Position gegen eine Rotation blockierbar, wodurch ein Bremselement in Anlage mit der Kontaktfläche bringbar ist.

Dadurch, dass das Reibrad der Memory-Vorrichtung bei einem Wiedererreichen der Memory-Position gegen eine Rotation blockierbar ist, wodurch ein Bremselement in Anlage mit der Kontaktfläche bringbar ist, ist es möglich, insbesondere aufgrund der Reibung zwischen Reibrad und Kontaktfläche, ein Verschieben der ersten Sitzschiene relativ zur zweiten Sitzschiene in Richtung der Memory-Position ab zu stoppen, sowie ein Verschieben der ersten Sitzschiene über die Memory-Position hinaus zu verhindern. Ferner kann auf einen Einsatz einer üblicherweise innerhalb eines von der ersten Sitzschiene und der zweiten Sitzschiene umschlossenen Hohlraums angeordneten und von der Memory-Vorrichtung betätigten Verriegelungseinrichtung verzichtet werden kann. Folglich bedarf es keiner Durchführung von Hebeln oder Gestängen durch eine entsprechende Durchtrittsöffnung in der ersten Sitzschiene, wodurch diese nicht durch die Durchtrittsöffnung in ihrer Stabilität und Belastbarkeit beeinträchtigt ist. Das zusätzliche Bremselement bewirkt darüber hinaus die Möglichkeit die Relativbewegung der ersten Sitzschiene relativ zur zweiten Sitzschiene mit einer höheren Geschwindigkeit abzubremsen und somit eine höhere Lastaufnahmefähigkeit bereitzustellen.

Vorteilhafte Ausgestaltungen, welche einzeln oder in Kombination miteinander eingesetzt werden können, sind Gegenstand der Unteransprüche.

Das Reibrad kann weiter um eine Reibradachse drehbar in einer um eine Schwingenachse schwenkbaren Reibradschwinge gelagert sein. Hierbei kann die Reibradschwinge unter Erzeugung einer Andruckkraft zwischen dem Reibrad und der Kontaktfläche in Richtung der Kontaktfläche der zweiten Sitzscheine federbelastet sein.

Das Bremselement kann an einem hinteren Ende der Reibradschwinge angeordnet sein. Das Bremselement kann bevorzugt einer Bewegung der Reibradschwinge folgend ausgestaltet, bzw. angeordnet sein. Das Bremselement kann ferner mittels eines Adapters an der Reibradschwinge gehalten sein.

Ferner kann die Reibradachse parallel zur Längsrichtung betrachtet hinter der Schwingenachse angeordnet sein. Weiter kann es vorgesehen sein, dass die Reibradachse einen geringeren Abstand zur Kontaktfläche als die Schwingenachse aufweist. Durch eine derartige geometrische Anordnung der Reibradachse sowie der Schwingenachse, wobei allgemein der Abstand der Reibradachse zur Kontaktfläche im Wesentlichen dem Radius des Reibrades entspricht, kann in vorteilhafter Weise insbesondere eine Andruckkraft des Reibrades auf die Kontaktfläche erhöht und dadurch die Wahrscheinlichkeit eines unerwünschten Abhebens des Reibrades von der Kontaktfläche verringert werden.

Das Reibrad kann derart ausgestaltet sein, dass das Reibrad eine von einem Reibbelag vollumfänglich umschlossene Felge aufweist.

Hierbei kann die Felge des Reibrads eine Ausnehmung, insbesondere ein Langloch, aufweisen. Die Ausnehmung kann in axialer Richtung betrachtet, in einer stirnseitigen Fläche angeordnet sein. Die Ausnehmung kann mit einem Sperrbolzen zusammenwirken, indem ein Sperrbolzen parallel zur Reibradachse in die Ausnehmung einführbar ist. Der Sperrbolzen kann mittels eines ersten Federelements in Richtung einer Freigabestellung, in welcher der Sperrbolzen außer Eingriff mit der Ausnehmung ist, federelastisch vorgespannt sein. Dies ermöglicht eine mechanische kraftbetätigte Aktivierung des Sperrbolzens, bzw. eine im Wesentlichen kraftneutrale Bereitstellung in einer Ruhestellung oder Neutralstellung. Die Ausnehmung kann eine Vertiefung oder eine durchgehende Öffnung sein.

Das Reibrad kann während der Relativbewegung ein Getriebe der Memory-Vorrichtung antreiben, welches mittels einer Spindel-Mutter-Anordnung auf eine Zahnstange wirkt. Das Getriebe ist bevorzugt derart ausgelegt, dass eine eingangsseitige Drehzahl des Reibrades mit einem vorbestimmten Untersetzungsverhältnis auf die Spindel-Mutter-Anordnung übertragbar ist.

Die Zahnstange kann ferner eine Steuerkontur aufweisen, wobei der Sperrbolzen mittels der Steuerkontur von der Freigabestellung in eine Blockierstellung, in welcher der Sperrbolzen in Eingriff mit der Ausnehmung ist, antreibbar ist. Die Zahnstange kann bevorzugt mittels eines Federelements in Richtung einer mit der Freigabestellung des Sperrbolzens kooperierenden Stellung der Zahnstange federelastisch vorgespannt sein.

Das mittels des Sperrbolzens blockierte Reibrad kann, insbesondere in Verbindung mit einer zuvor beschriebenen geometrischen Anordnung der Reibradachse und der Schwingenachse, über den Sperrbolzen ein Moment auf die Reibradschwinge bewirken, wodurch das Reibrad gegen die Kontaktfläche gedrückt wird.

Die Reibradachse und die Schwingenachse können parallel zu einer Vertikalrichtung verlaufen. Dies hat den Vorteil, dass eine für die Memory-Vorrichtung benötige Bauhöhe reduziert sein kann. Alternativ können die Reibradachse und die Schwingenachse jedoch auch parallel zu einer Querrichtung verlaufen.

Die zu Grunde liegende Aufgabe wird ferner erfindungsgemäß gelöst durch einen Fahrzeugsitz aufweisend ein Sitzteil, eine Lehne und einen mit dem Sitzteil verbundenen Längseinsteller gemäß der vorhergehenden Beschreibung.

Zusammenfassend und mit anderen Worten ausgedrückt, ist eine mit der ersten Sitzschiene fest verbundene Memory-Vorrichtung vorgesehen, welche über ein Reibrad verfügt, das während einem Easy-Entry-Ablauf in Kontakt zur zweiten Sitzschiene steht. Das Reibrad treibt ein Getriebe an, welches aus Zahnrädern gebildet ist und eine Spindel-Mutter-Anordnung antreibt. Aufgabe der Mutter der Spindel-Mutter-Anordnung ist es, zum einen mittels des auf eine Zahnstange wirkenden Zahnsegments eine Komfortfunktion anzutreiben, zum anderen das Reibrad zu blockieren, wenn die Memory-Vorrichtung die Memory-Position wieder erreicht hat. Die Komfortfunktion kann bevorzugt ein bei Erreichen der Memory-Position automatisches Entriegeln eines die Lehne in einer vorgeklappten Stellung verriegelnden Lehneneinstellers sein. Das Abstoppen wird dadurch bewirkt, dass ebenfalls mittels des Zahnsegmentes und der Zahnstange ein Sperrbolzen betätigbar ist, welcher das Reibrad durch ein Eingreifen des Sperrbolzens in eine Felge des Reibrades blockiert und die Reibung zwischen Reibrad und zweiter Sitzscheine eine weitere Verschiebung der ersten Sitzschiene relativ zur zweiten Sitzschiene verhindert.

### Figuren und Ausführungsformen der Erfindung

Bevor nachfolgend Ausgestaltungen der Erfindung eingehender an Hand von Zeichnungen beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung der Singular verwendet wird ist dabei jeweils der Plural mitumfasst, soweit der Kontext dies nicht explizit ausschließt.

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine schematische Ansicht eines Fahrzeugsitzes mit einem erfindungsgemäßen Längseinsteller,
- Fig. 2:: eine Darstellung eines erfindungsgemäßen Längseinstellers,
- Fig. 3:: eine perspektivische Darstellung eines Sitzschienenpaares mit einer Memory-Vorrichtung,
- Fig. 4:: eine Explosionsdarstellung der Memory-Vorrichtung,
- Fig. 5:: eine perspektivische Darstellung der Memory-Vorrichtung von schräg oben,
- Fig. 6:: eine perspektivische Darstellung der Memory-Vorrichtung von schräg unten,
- Fig. 7:: eine Seitenansicht der Memory-Vorrichtung ohne Gehäuse in Querrichtung,
- Fig. 8:: eine Seitenansicht der Memory-Vorrichtung ohne Gehäuse aus einem zu Fig. 7 entgegen gerichteten Blickwinkel,
- Fig. 9:: eine ausschnittsweise Ansicht von oben auf das Sitzschienenpaar von Fig. 3 in einem Zustand mit blockiertem Reibrad,
- Fig. 10:: eine Schnittdarstellung entlang der Schnittverlaufslinie X-X in Fig. 9,
- Fig. 11:: eine weitere perspektivische Darstellung des Sitzschienenpaares mit der Memory-Vorrichtung,
- Fig. 12:: eine Ansicht der Memory-Vorrichtung ohne Gehäuse von unten in einem Zustand mit beweglichem Reibrad, und
- Fig. 13:: eine Ansicht der Memory-Vorrichtung ohne Gehäuse von unten in einem Zustand mit blockiertem Reibrad.

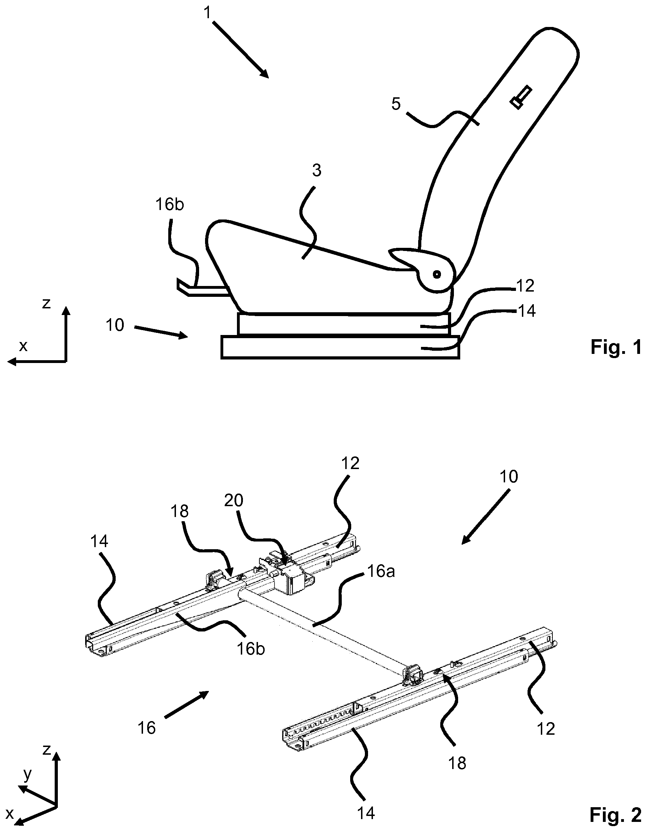

Ein in Figur 1 schematisch dargestellter Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Lehne 3 und wie üblich in Fahrtrichtung ausgerichtet ist. Der erfindungsgemäße Fahrzeugsitz 1 kann jedoch auch in abweichender Ausrichtung, beispielsweise quer zur Fahrtrichtung verbaut werden.

Der in Fig. 1 gezeigte Fahrzeugsitz 1 für ein Kraftfahrzeug weist ein Sitzteil 3 und eine relativ zum Sitzteil 3 in ihrer Neigung einstellbare Lehne 5 auf. Die Neigung der Lehne 5 kann beispielsweise mittels eines Rastbeschlages oder eines Getriebebeschlages einstellbar sein. Der Fahrzeugsitz 1 ist zur Einstellung einer Sitzlängsposition auf einem Längseinsteller 10 montiert.

Der in Fig. 2 gezeigte Längseinsteller 10 des Fahrzeugsitzes 1 weist zwei Sitzschienenpaare auf, welche jeweils aus einer ersten Sitzschiene 12, insbesondere einer sitzfesten Oberschiene, und einer zweiten Sitzschiene 14, insbesondere einer fahrzeugfesten Unterschiene, gebildet sind. Die Sitzschienen, eines jeden Sitzschienenpaares, umgreifen einander wechselseitig und sind in Längsrichtung x relativ zueinander beweglich. Ferner sind die ersten Sitzschienen 12 und die zweiten Sitzschienen 14 des jeweiligen Sitzschienenpaares, mittels einer Schienenverriegelung 18 miteinander verriegelbar, wobei zur gemeinsamen Betätigung der beiden Schienenverriegelungen 18 eine Betätigungseinrichtung 16 mit einer die beiden Schienenverriegelungen 18 wirkverbindenden Übertragungsstange 16a vorgesehen ist, wobei die Übertragungsstange 16a mit beiden Schienenverriegelungen 18 zusammenwirkt. Die Betätigungseinrichtung 16 weist ferner einen an der Übertragungsstange 16a angreifenden Handgriff 16b auf. Ferner weist der Längseinsteller 10 eine Memory-Vorrichtung 20 auf.

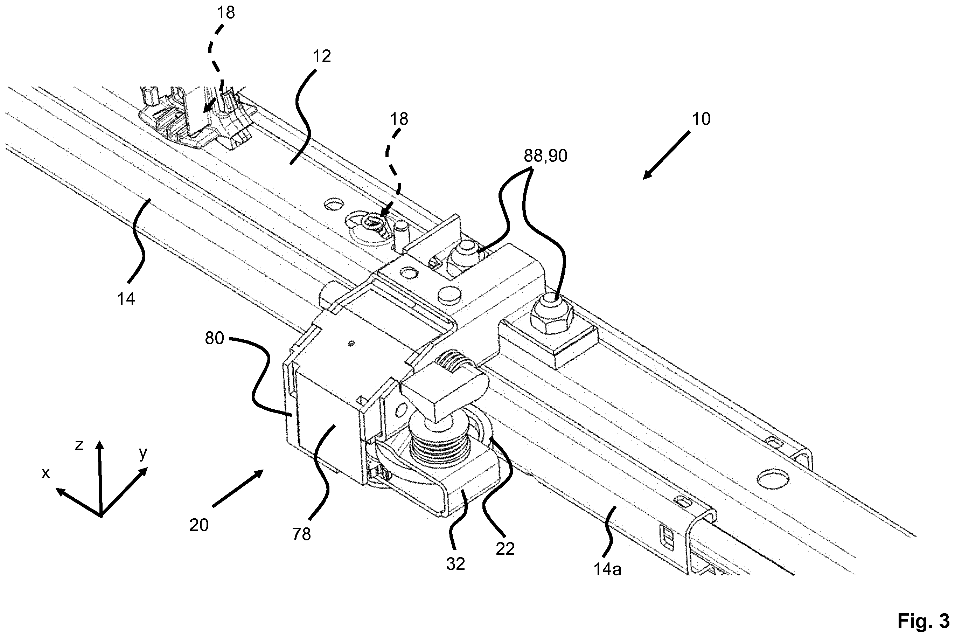

Fig. 3 zeigt eine Darstellung des Sitzschienenpaares mit der Memory-Vorrichtung 20, wobei die Memory-Vorrichtung 20 der ersten Sitzscheine 12 zugeordnet ist und mit der zweiten Sitzschiene 14 zusammenwirkt. Die Memory-Vorrichtung 20 ist bevorzugt fest mit der ersten Sitzschiene 12 verbunden, vorliegend mittels vorzugsweise an der ersten Sitzschiene 12 befestigten Gewindebolzen 88 und Muttern 90 montiert. Mittels der Memory-Vorrichtung 20 ist eine von einer als Memory-Position bezeichneten Sitzlängsposition ausgehende Relativbewegung zwischen der ersten Sitzschiene 12 und der zweiten Sitzschiene 14 erfassbar. Hierzu weist die Memory-Vorrichtung 20 ein Reibrad 22 auf, welches eine relativ zur Memory-Vorrichtung 20 bewegbare Kontaktfläche 14a der zweiten Sitzschiene 14 kontaktiert und abfährt. Das Reibrad 22 ist in einer Reibradschwinge 32 drehbar gelagert. Die Memory-Vorrichtung 20 weist ferner ein aus einem ersten Gehäuseteil 78 und einem zweiten Gehäuseteil 80 gebildetes Gehäuse auf.

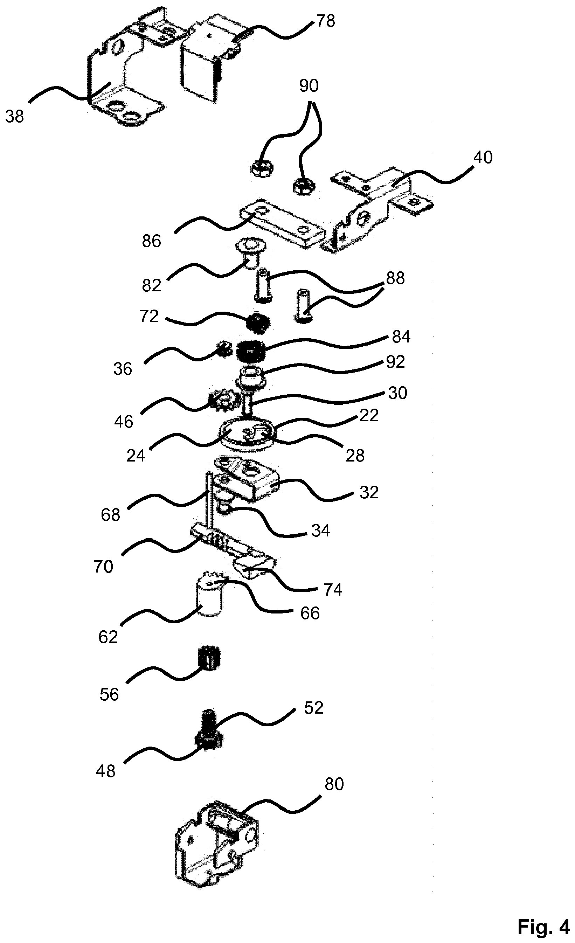

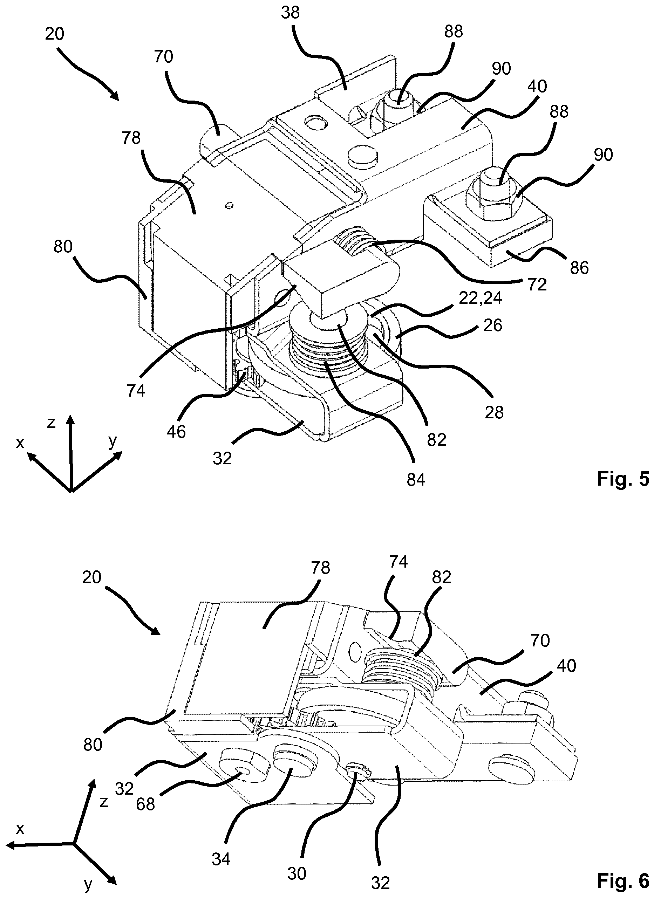

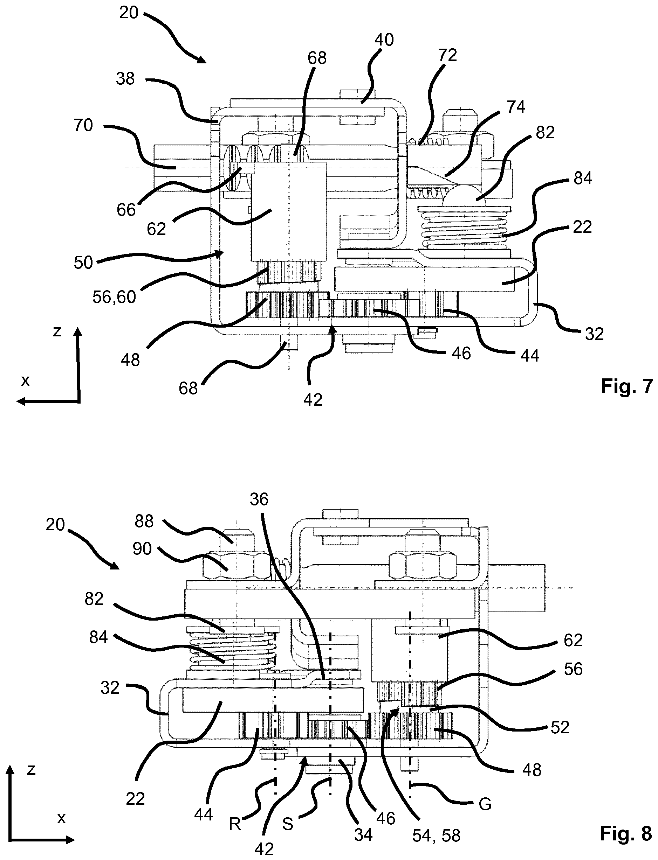

In Fig. 4 sind die wesentlichen Komponenten der Memory-Vorrichtung 20 in einer Explosionsdarstellung gezeigt. Ferner zeigen die Figuren 5 bis 8 die Memory-Vorrichtung 20 in zusammengesetztem Zustand aus unterschiedlichen Blickwinkeln.

Zur Befestigung der Memory-Vorrichtung 20 an der ersten Sitzschiene 12 dienen ein erstes und ein zweites Trägerteil 38, 40, welche miteinander verbindbar, insbesondere vernietbar, sind. Das erste und zweite Trägerteil 38, 40 sind bevorzugt aus einem metallischen Werkstoff, insbesondere einem Metallblech, gefertigt. Das erste und zweite Trägerteil 38, 40 sind mittels jeweils eines Gewindebolzens 88 und einer Mutter 90 mit der ersten Sitzschiene 12 verschraubt. Hierbei ist zwischen den Trägerteilen 38, 40 und der ersten Sitzschiene 12 ein Abstandselement 86 vorgesehen, welches unterschiedlich dick ausgestaltet sein kann und einer Anpassung der Lage des Reibrades 22 an der zweiten Sitzschiene 14 aufgrund unterschiedlich ausgestalteter Schienenprofile dient.

Das Reibrad 22 weist eine Felge 24 auf, welche vollumfänglich von einem Reibbelag 26 umschlossen ist. Das Reibrad 22 ist mittels eines Lagerstifts 30 in der Reibradschwinge 32 gehalten und um eine Reibradachse R drehbar gelagert. Die Reibradschwinge 32 ist um eine Schwingenachse S schwenkbar gelagert.

Vorliegend verlaufen die Reibradachse R und die Schwingenachse S parallel zu einer Vertikalrichtung z.

Das Reibrad 22 treibt während der Relativbewegung ein Getriebe 42 der Memory-Vorrichtung 20 an. Hierzu ist zunächst ein erstes Zahnrad 44 des Getriebes 42 um die Reibradachse R drehbar gelagert und mit dem Reibrad 22 drehfest verbunden. Eine Drehbewegung des Reibrades 22 ist somit mittels des ersten Zahnrades 44 an ein benachbart angeordnetes und mit dem ersten Zahnrad 44 in Eingriff befindliches zweites Zahnrad 46 übertragbar. Das zweite Zahnrad 46 ist bevorzugt um die Schwingenachse S drehbar gelagert. Vorliegend ist das zweite Zahnrad 46 zusammen mit einem unteren Arm der Reibradschwinge 32 mittels eines ersten Bolzens 34 in dem ersten Trägerteil 38 gehaltert. Ein oberer Arm der Reibradschwinge 32 ist mittels eines zweiten Bolzens 36 in dem zweiten Trägerteil 40 gehaltert. Ein drittes Zahnrad 48 des Getriebes 42 ist um einen Lagerbolzen 68 einer Spindel-Mutter-Anordnung 50 drehbar gelagert und zudem drehfest mit einer Gewindespindel 52 der Spindel-Mutter-Anordnung 50 verbunden. Somit kann eine Drehbewegung des Reibrades 22 über das erste und zweite Zahnrad 44, 46 auf das dritte Zahnrad 48 und die Gewindespindel 52 übertragen werden. Die Zahnräder 44, 46, 48 des Getriebes 42 sind paarweise entsprechend vorbestimmter Untersetzungsverhältnisse und/oder Übersetzungsverhältnisse dimensioniert.

Die Gewindespindel 52 ist mittels des Lagerbolzens 68 um die Spindelachse G drehbar gelagert. Abtriebsseitig wirkt die Spindel-Mutter-Anordnung 50 mittels eines drehfest an einem Lagerabschnitt 62 der Spindel-Mutter-Anordnung 50 angeordneten Zahnsegments 66 auf eine Zahnstange 70. Die Zahnstange 70 ist in einer in dem zweiten Gehäuseteil 80 geformten Führung verschiebbar gehalten. Die Führung weist eine Öffnung zum Durchgriff für das Zahnsegment 66 auf. Die in Längsrichtung x äußeren Ränder der Öffnung dienen jeweils als ein Endanschlag für das Zahnsegment 66.

An einem aus dem Gehäuse ausgetretenen Ende der Zahnstange 70 ist eine Steuerkontur 74 vorgesehen, welche auf einen Sperrbolzen 82 wirkt. Der Sperrbolzen 82 ist mit einer Ausnehmung 28 in der Felge 24 des Reibrades 22 in Eingriff bringbar. Der Sperrbolzen 82 ist mittels einem Federelement 84 in Richtung einer Freigabestellung, in welcher der Sperrbolzen 82 außer Eingriff mit der Ausnehmung 28 der Felge 24 ist, vorgespannt. In dem in den Figuren 5 bis 8 dargestellten Zustand der Memory-Vorrichtung 20 befindet sich der Sperrbolzen 82 in der Blockierstellung, in welcher der Sperrbolzen 82 in Eingriff mit der Ausnehmung 28 ist, wenn sich der Fahrzeugsitz 1 in der Memory-Position befindet. Die Zahnstange 70 ist bevorzugt mittels eines Federelements 72 in Richtung einer mit der Freigabestellung des Sperrbolzens 82 kooperierenden Stellung der Zahnstange 70 federelastisch vorgespannt. Die Zahnstange 70 kann zusätzlich beispielsweise zur Betätigung einer Verriegelung eines Lehnenbeschlags dienen, so dass bei Verlassen einer Memory-Position die Lehne 3 in einer vorgeschwenkten Stellung verriegelt bleibt und bei anschließendem Wiedererreichen der Memory-Position automatisch in ihrer Schwenkbewegung freigegeben wird.

Ferner ist ein mit der Spindel-Mutter-Anordnung 50 zusammenwirkender Anschlag 54 vorgesehen, welcher sich in der Memory-Position in Anlage mit einem Anschlag 58 einer auf einem Außengewinde der Gewindespindel 52 gelagerten Mutter 56 befindet. Der Anschlag 54 ist vorliegend an einem Abschnitt der Gewindespindel 52 ausgebildet. Der Anschlag 54 kann jedoch beispielsweise auch als ein Teil des stirnseitig an der Gewindespindel 52 angeordneten dritten Zahnrades 48 gebildet sein. Die Mutter 56 ist über ein Innengewinde auf dem Außengewinde der Gewindespindel 52 in axialer Richtung auf und ab schraubbar. Ferner weist die Mutter 56 auf der Außenseite eine koaxial zur Spindelachse G der Gewindespindel 52 orientierte Längsverzahnung 60 auf. Diese Längsverzahnung 60 der Mutter 56 ist in einer entsprechend ebenfalls koaxial zur Spindelachse G der Gewindespindel 52 orientierten, als Innenverzahnung ausgestalteten, Längsverzahnung 64 eines Lagerabschnitts 62 in entsprechend dieser koaxialen Richtung parallel zur Vertikalrichtung z geführt.

Wenn der Anschlag 54 der Gewindespindel 52 unmittelbar vor einem Wiedererreichen der Memory-Position in Anlage mit einem Anschlag 58 der Mutter 56 gelangt, ist die Mutter 56 nicht weiter relativ zur Gewindespindel 52 drehbar und eine mittels des Getriebes 42 übertragene Drehbewegung wird von der Spindel-Mutter-Anordnung 50 auf das Zahnsegment 66 übertragen, welches hierdurch die Zahnstange 70 betätigt. Die Zahnstange 70 betätigt hierbei den Sperrbolzen 82, wodurch das Reibrad 22 blockiert, sobald eine in Drehrichtung hintere Begrenzung der Ausnehmung 28 mit dem Sperrbolzen 82 in Anlage gelangt. Bei einer derartigen Blockierung des Reibrades 22 bewirkt das Reibrad 22 aufgrund seiner Lagerung in der Reibradschwinge 32 über den Sperrbolzen 82 ein Moment auf die Reibradschwinge 32, wodurch das Reibrad 22 stärker gegen die Kontaktfläche 14a gedrückt wird. Anders ausgedrückt, wird hierdurch die Andruckkraft des Reibrades 22 auf die Kontaktfläche 14a erhöht und eine Abrollbewegung des Reibrades 22 entlang der Kontaktfläche 14a der zweiten Sitzschiene 14 abgebremst, wodurch ein Verschieben der ersten Sitzschiene 12 relativ zur zweiten Sitzschiene 14 in Richtung der Memory-Position abgestoppt wird und ein Verschieben der ersten Sitzschiene 12 über die Memory-Position hinaus verhindert ist.

Die Reibradschwinge 32 ist mittels einer aus darstellungstechnischen Gründen nicht gezeigten Feder unter einer Erzeugung einer Andruckkraft zwischen dem Reibrad 22 und der Kontaktfläche 14a in Richtung der Kontaktfläche 14a der zweiten Sitzschiene 14 federbelastet. Hierdurch kann die Memory-Vorrichtung 20, während eines Zustandes in welchem der Fahrzeugsitz 1 in seiner Bewegung nicht abgebremst und blockiert werden soll, zur Beaufschlagung des Reibrades 22 mit einer vergleichsweise geringeren Andruckkraft eingerichtet sein, welche lediglich ein unerwünschtes Abheben des Reibrades 22 von der Kontaktfläche 14a verhindert und ein sicheres Erfassen der Relativbewegung der ersten Sitzschiene 12 relativ zur zweiten Sitzschiene 14 ermöglicht. Ferner dient dies einem Schutz eines unbeabsichtigten Abhebens des Reibrades 22 von der Kontaktfläche 14a, wodurch Klappergeräusche entstehen können. Ein beabsichtigtes Abheben des Reibrades 22 von der Kontaktfläche 14a kann ferner beispielsweise mittels eines nicht dargestellten Reset-Mechanismus erfolgen, wobei die Memory-Vorrichtung 20 mittels einer beispielsweise auf das Getriebe 42 wirkenden Rückstellfeder auf einen einer Memory-Position entsprechenden Nullwert zurücksetzbar ist. Ein derartiger Reset ist beispielsweise bei einem manuellen Einstellen einer neuen Sitzlängsposition durchführbar.

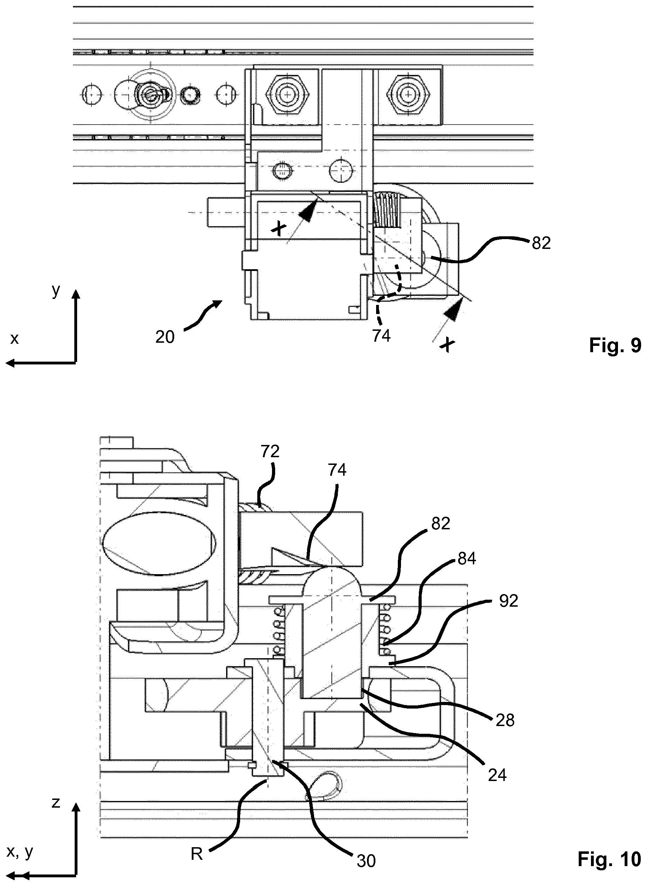

Die Fig. 9 dient im Wesentlichen der Wiedergabe der Lage der Schnittverlaufslinie der in Fig. 10 gezeigten Schnittdarstellung.

In Fig. 10 ist eine weitere Darstellung des Sperrbolzens 82 in der Blockierstellung gezeigt. Vorliegend erstreckt sich die in Form einer Vertiefung ausgestaltete Ausnehmung 28 in der Felge 24 in Vertikalrichtung z lediglich über einen Teil der Dicke der Felge 24. Darüber hinaus ist der Sperrbolzen 82 vorliegend in einer Lagerbuchse 92 geführt, wodurch ferner eine Eindringtiefe des Sperrbolzens 82 begrenzt ist. Durch die Begrenzung der Eindringtiefe des Sperrbolzens 82 in die Ausnehmung 28 ist beispielsweise ein Abrieb des Sperrbolzens 82 an einem Boden der Ausnehmung 28 vermieden. Alternativ kann die Ausnehmung 28 vollständig durch die Felge 24 hindurchreichend ausgebildet sein.

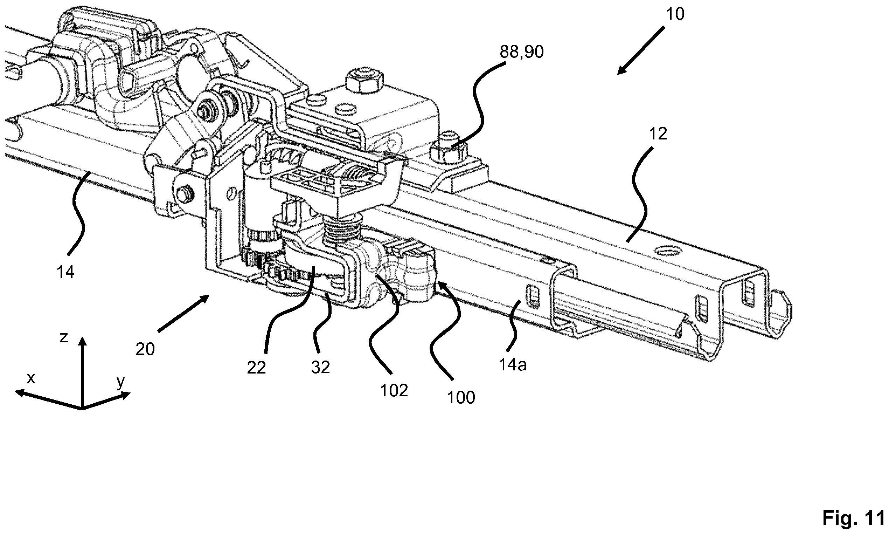

In Fig. 11 ist eine weitere perspektivische Darstellung eines Sitzschienenpaares 12, 14 mit einer Memory-Vorrichtung 20 gezeigt. Die in Fig. 11 dargestellte Memory-Vorrichtung 20 unterscheidet sich von der in Fig. 3 dargestellten Memory-Vorrichtung 20 lediglich dadurch, dass an einem stirnseitigen Endabschnitt der Reibradschwinge 32 ein Adapter 102 angeordnet ist. Der Adapter 102 hält ein Bremselement 100. Das Bremselement 100 erstreckt sich vorliegend im Wesentlichen über die gesamte Erstreckung der Reibradschwinge 32 in Vertikalrichtung z. Folglich ist das Bremselement 100 vorliegend breiter als das Reibrad 22. Das Bremselement 100 kann aus einem Kunststoff, insbesondere aus einem Elastomer, gefertigt sein.

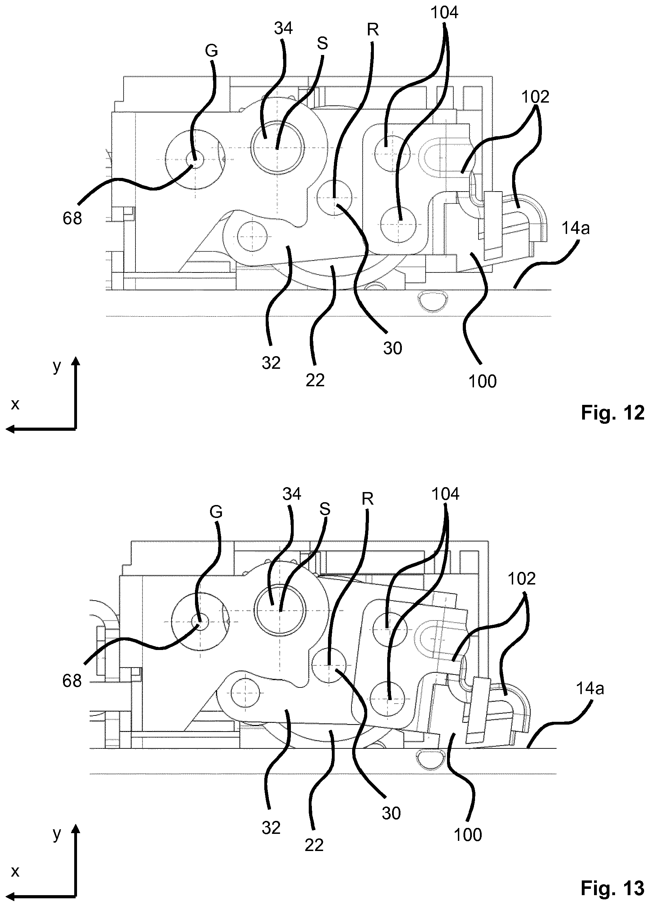

In den Figuren 12 und 13 ist jeweils eine Ansicht auf die Memory-Vorrichtung 20 ohne ein erstes Gehäuseteil 78 aus eine Blickrichtung von unten gezeigt. Hierbei stellt Fig. 12 einen Zustand mit beweglichem Reibrad 22 und Fig. 13 einen Zustand mit blockiertem Reibrad 22 dar. Der Adapter 102 ist mittels zweier Fixierelemente 104 an der Reibradschwinge 32 befestigt. Hierbei kann eine Befestigung an dem unteren Arm der im Querschnitt U-förmigen Reibradschwinge 32 ausreichen. Auf dem gegenüberliegenden oberen Arm der Reibradschwinge 32 ist wie in Fig. 11 gezeigt kein Fixierelement 104 erforderlich. Eine der Kontaktfläche 14a zugewandte Oberfläche des Bremselements 100 weist einen vorbestimmten Winkel relativ zur Kontaktfläche 14a auf, wenn das Reibrad 22 beweglich ist, bzw. nicht blockiert ist.

Im Falle eines Blockierens des Reibrades 22, wie es in Fig. 13 gezeigt ist, neigt sich die Reibradschwinge 32, aufgrund einer Elastizität des Schienenpaares und der Memory-Vorrichtung 20, mit ihrem stirnseitigen Ende in Richtung der Kontaktfläche 14a und führt das Bremselement 100 dieser Bewegung folgend mit sich. Hierbei ist das Bremselement 100 mit der Kontaktfläche 14a in Kontakt bringbar, wobei sich je nach Neigungswinkel der Reibradschwinge 32 die von dem Bremselement 100 kontaktierte Kontaktfläche 14a erhöht. Das Bremselement 100 ist derart an der Reibradschwinge 32 gehalten, dass es bei blockiertem Reibrad 22 entsprechend mit einem Teil einer generierten Normalkraft an die Kontaktfläche 14a angedrückt wird. Folglich wird eine Aufteilung der Normalkraft auf das Reibrad 22 und auf das Bremselement 100 bewirkt, wodurch das Reibrad 22 im Vergleich zu einer Abbremsvorrichtung mit einem Reibrad 22 ohne zusätzliches Bremselement 100 entlastet ist. Zudem weist das Bremselement 100 eine größere Kontaktfläche zur Kontaktfläche 14a der zweiten Sitzschiene 14 auf, als das Reibrad 22, und kann folglich höhere Normalkräfte aufnehmen, insbesondere ohne zu plastifizieren. Die in der vorstehenden Beschreibung und den Zeichnungen offenbarten Merkmale können sowohl einzeln als auch in Kombination für die Verwirklichung der Erfindung in ihren verschiedenen Ausgestaltungen von Bedeutung sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung und den Figuren.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Vorrichtung kann die Funktionen mehrerer in den Ansprüchen genannten Einheiten bzw. Einrichtungen ausführen.

### Bezugszeichenliste

- 1: Fahrzeugsitz
- 3: Sitzteil
- 5: Lehne
- 10: Längseinsteller
- 12: erste Sitzschiene
- 14: zweite Sitzschiene
- 14a: Kontaktfläche
- 16: Betätigungseinrichtung
- 16a: Übertragungsstange
- 16b: Handgriff
- 18: Schienenverriegelung
- 20: Memory-Vorrichtung
- 22: Reibrad
- 24: Felge
- 26: Reibbelag
- 28: Ausnehmung
- 30: Lagerstift
- 32: Reibradschwinge
- 34: erster Bolzen
- 36: zweiter Bolzen
- 38: erstes Trägerteil
- 40: zweites Trägerteil
- 42: Getriebe
- 44: erstes Zahnrad
- 46: zweites Zahnrad
- 48: drittes Zahnrad
- 50: Spindel-Mutter-Anordnung
- 52: Gewindespindel
- 54: Anschlag
- 56: Mutter
- 58: Anschlag
- 60: Längsverzahnung
- 62: Lagerabschnitt
- 64: Längsverzahnung
- 66: Zahnsegment
- 68: Lagerbolzen
- 70: Zahnstange
- 72: Federelement
- 74: Steuerkontur
- 78: erstes Gehäuseteil
- 80: zweites Gehäuseteil
- 82: Sperrbolzen
- 84: Federelement
- 86: Abstandselement
- 88: Gewindebolzen
- 90: Mutter
- 92: Lagerbuchse
- 100: Bremselement
- 102: Adapter
- 104: Fixierelement

- R: Reibradachse
- S: Schwingenachse
- G: Spindelachse
- x: Längsrichtung
- y: Querrichtung
- z: Vertikalrichtung

## Patentansprüche

1. Längseinsteller (10) für einen ein Sitzteil (3) und eine Lehne (5) aufweisenden Fahrzeugsitz (1), insbesondere einen Kraftfahrzeugsitz, wobei der Längseinsteller (10) eine erste Sitzschiene (12) und eine zweite Sitzschiene (14) aufweist, wobei die erste Sitzschiene (12) relativ zur zweiten Sitzschiene (14) in einer Längsrichtung (x) verschiebbar ist, wobei eine der ersten Sitzschiene (12) zugeordnete und mit der zweiten Sitzschiene (14) zusammenwirkende Memory-Vorrichtung (20) vorgesehen ist, wobei eine von einer als Memory-Position bezeichneten Sitzlängsposition ausgehende Relativbewegung zwischen der ersten Sitzschiene (12) und der zweiten Sitzschiene (14) mittels eines Reibrades (22) der Memory-Vorrichtung (20) erfassbar ist, wobei das Reibrad (22) hierzu eine relativ zur Memory-Vorrichtung (20) bewegbare Kontaktfläche (14a) kontaktiert und abfährt,
**dadurch gekennzeichnet, dass**
das Reibrad (22) der Memory-Vorrichtung (20) bei einem Wiedererreichen der Memory-Position blockierbar ist, wodurch ein Bremselement (100) in Anlage mit der Kontaktfläche (14a) bringbar ist.

2. Längseinsteller (10) gemäß Anspruch 1, wobei das Reibrad (22) um eine Reibradachse (R) drehbar in einer um eine Schwingenachse (S) schwenkbaren Reibradschwinge (32) gelagert ist.

3. Längseinsteller (10) gemäß Anspruch 2, wobei das Bremselement (100) an einem hinteren Ende der Reibradschwinge (32) angeordnet ist.

4. Längseinsteller (10) gemäß einem der Ansprüche 2 oder 3, wobei das Bremselement (100) einer Bewegung der Reibradschwinge (32) folgend ausgestaltet ist.

5. Längseinsteller (10) gemäß einem der Ansprüche 2 bis 4, wobei das Bremselement (100) mittels eines Adapters (102) an der Reibradschwinge (32) gehalten ist.

6. Längseinsteller (10) gemäß einem der Ansprüche 2 bis 5, wobei die Reibradachse (R) parallel zur Längsrichtung (x) betrachtet hinter der Schwingenachse (S) angeordnet ist.

7. Längseinsteller (10) gemäß einem der Ansprüche 2 bis 6, wobei die Reibradachse (R) einen geringeren Abstand zur Kontaktfläche (14a) als die Schwingenachse (S) aufweist.

8. Längseinsteller (10) gemäß einem der Ansprüche 1 bis 7, wobei eine Felge (24) des Reibrads (22) eine Ausnehmung (28) aufweist.

9. Längseinsteller (10) gemäß Anspruch 8, wobei ein Sperrbolzen (82) parallel zur Reibradachse (R) in die Ausnehmung (28) einführbar ist.

10. Längseinsteller (10) gemäß Anspruch 9, wobei das Reibrad (22) während der Relativbewegung ein Getriebe (42) der Memory-Vorrichtung (20) antreibt, welches mittels einer Spindel-Mutter-Anordnung (50) auf eine Zahnstange (70) wirkt.

11. Längseinsteller (10) gemäß Anspruch 10, wobei die Zahnstange (70) eine Steuerkontur (72) aufweist, wobei der Sperrbolzen (82) mittels der Steuerkontur (72) von der Freigabestellung in eine Blockierstellung, in welcher der Sperrbolzen (82) in Eingriff mit der Ausnehmung (28) ist, antreibbar ist.

12. Längseinsteller (10) gemäß einem der Ansprüche 9 bis 11, wobei das mittels des Sperrbolzens (82) blockierte Reibrad (22) über den Sperrbolzen (82) ein Moment auf die Reibradschwinge (32) bewirkt, wodurch das Reibrad (22) gegen die Kontaktfläche (14a) gedrückt wird.

13. Fahrzeugsitz (1) aufweisend ein Sitzteil (3), eine Lehne (5) und einen mit dem Sitzteil (3) verbundenen Längseinsteller (10) gemäß einem der vorhergehenden Ansprüche.

## Claims

1. Longitudinal adjuster (10) for a vehicle seat (1), in particular a motor-vehicle seat, having a seat part (3) and a backrest (5), wherein the longitudinal adjuster (10) has a first seat rail (12) and a second seat rail (14), wherein the first seat rail (12) can be displaced in a longitudinal direction (x) relative to the second seat rail (14), wherein a memory device (20) is provided, said memory device being assigned to the first seat rail (12) and interacting with the second seat rail (14), wherein a relative movement which takes place between the first seat rail (12) and the second seat rail (14), starting from a longitudinal seat position referred to as the memory position, can be detected by means of a friction wheel (22) of the memory device (20), wherein, for this purpose, the friction wheel (22) establishes contact with, and moves along, a contact surface (14a), which can be moved relative to the memory device (20),
**characterized in that**
the friction wheel (22) of the memory device (20) can be blocked when the memory position is reached again, as a result of which a braking element (100) can be brought into adjustment with the contact surface (14a).

2. Longitudinal adjuster (10) according to Claim 1, wherein the friction wheel (22) is mounted, for rotation about a friction-wheel axis (R), in a friction-wheel rocker (32) which can be pivoted about a rocker axis (S).

3. Longitudinal adjuster (10) according to Claim 2, wherein the braking element (100) is arranged at a rear end of the friction-wheel rocker (32).

4. Longitudinal adjuster (10) according to either of Claims 2 and 3, wherein the braking element (100) is configured to follow a movement of the friction-wheel rocker (32).

5. Longitudinal adjuster (10) according to one of Claims 2 to 4, wherein the braking element (100) is retained on the friction-wheel rocker (32) by means of an adapter (102).

6. Longitudinal adjuster (10) according to one of Claims 2 to 5, wherein the friction-wheel axis (R) is arranged behind the rocker axis (S), as seen parallel to the longitudinal direction (x).

7. Longitudinal adjuster (10) according to one of Claims 2 to 6, wherein the friction-wheel axis (R) is spaced apart from the contact surface (14a) by a smaller distance than is the rocker axis (S).

8. Longitudinal adjuster (10) according to one of Claims 1 to 7, wherein a rim (24) of the friction wheel (22) has a recess (28).

9. Longitudinal adjuster (10) according to Claim 8, wherein an arresting bolt (82) can be introduced into the recess (28) parallel to the friction-wheel axis (R).

10. Longitudinal adjuster (10) according to Claim 9, wherein, during the relative movement, the friction wheel (22) drives a gear mechanism (42) of the memory device (20), said gear mechanism acting on a rack (70) by means of a spindle/nut arrangement (50).

11. Longitudinal adjuster (10) according to Claim 10, wherein the rack (70) has a control contour (72), wherein the arresting bolt (82) can be driven, by means of the control contour (72), from the disengagement position into a blocking position, in which the arresting bolt (82) is in engagement with the recess (28).

12. Longitudinal adjuster (10) according to one of Claims 9 to 11, wherein the friction wheel (22), which is blocked by means of the arresting bolt (82), subjects the friction-wheel rocker (32) to a moment via the arresting bolt (82), as a result of which the friction wheel (22) is pushed against the contact surface (14a).

13. Vehicle seat (1) having a seat part (3), a backrest (5) and a longitudinal adjuster (10) according to one of the preceding claims, said longitudinal adjuster being connected to the seat part (3).

## Revendications

1. Dispositif de réglage longitudinal (10) destiné à un siège de véhicule (1), en particulier un siège de véhicule automobile, comportant une partie formant une assise (3) et un dossier (5), le dispositif de réglage longitudinal (10) comprenant un premier rail de siège (12) et un deuxième rail de siège (14), le premier rail de siège (12) pouvant être déplacé par rapport au deuxième rail de siège (14) dans une direction longitudinale (x), un dispositif à mémoire (20) étant prévu qui coopère avec le deuxième rail de siège (14) et qui est associé au premier rail de siège (12), un mouvement relatif qui est effectué entre le premier rail de siège (12) et le deuxième rail de siège (14) et qui part d'une position de siège longitudinale désignée par position en mémoire pouvant être détecté au moyen d'une roue à friction (22) du dispositif à mémoire (20), pour cela la roue à friction (22) venant en contact avec une surface de contact (14a), mobile par rapport au dispositif à mémoire (20), et roulant sur celle-ci,
**caractérisé en ce que**
la roue à friction (22) du dispositif à mémoire (20) peut être bloquée lorsque la position en mémoire est à nouveau atteinte, de sorte qu'un élément de frein (100) puisse être amené en appui avec la surface de contact (14a) .

2. Dispositif de réglage longitudinal (10) selon la revendication 1, la roue à friction (22) étant montée dans un bras oscillant (32), pouvant pivoter sur un axe d'oscillation (S), de manière rotative sur un axe (R).

3. Dispositif de réglage longitudinal (10) selon la revendication 2, l'élément de freinage (100) étant disposé à une extrémité arrière du bras oscillant (32) de la roue à friction.

4. Dispositif de réglage longitudinal (10) selon l'une des revendications 2 ou 3, l'élément de frein (100) étant configuré de manière à suivre un mouvement du bras oscillant (32) de la roue à friction.

5. Dispositif de réglage longitudinal (10) selon l'une des revendications 2 à 4, l'élément de frein (100) étant retenu sur le bras oscillant (32) de la roue à friction au moyen d'un adaptateur (102).

6. Dispositif de réglage longitudinal (10) selon l'une des revendications 2 à 5, l'axe (R) de la roue à friction étant disposé en arrière de l'axe (S) du bras oscillant dans une vue parallèle à la direction longitudinale (x).

7. Dispositif de réglage longitudinal (10) selon l'une des revendications 2 à 6, l'axe (R) de la roue à friction étant placé à une plus faible distance de la surface de contact (14a) que l'axe (S) du bras oscillant.

8. Dispositif de réglage longitudinal (10) selon l'une quelconque des revendications 1 à 7, dans lequel une jante (24) de la roue à friction (22) présente un évidement (28).

9. Dispositif de réglage longitudinal (10) selon la revendication 8, dans lequel un boulon de blocage (82) peut être introduit dans l'évidement (28) parallèlement à l'axe (R) de la roue à friction.

10. Dispositif de réglage longitudinal (10) selon la revendication 9, dans lequel la roue à friction (22), pendant le mouvement relatif, entraîne une transmission (42) du dispositif à mémoire (20), qui agit au moyen d'un agencement à broche et écrou (50) sur une crémaillère (70).

11. Dispositif de réglage longitudinal (10) selon la revendication 10, dans lequel la crémaillère (70) présente une came de commande (72), le boulon de blocage (82) pouvant être entraîné au moyen de la came de commande (72) de la position de libération dans une position bloquée dans laquelle le boulon de blocage (82) est en prise avec l'évidement (28).

12. Dispositif de réglage longitudinal (10) selon l'une des revendications 9 à 11, la roue à friction (22), qui est bloquée au moyen du boulon de blocage (82), générant au moyen du boulon de blocage (82) un moment sur le bras oscillant (32) de la roue à friction, de sorte que la roue à friction (22) est pressée contre la surface de contact (14a).

13. Siège de véhicule (1) comprenant une partie formant une assise (3), un dossier (5) et un dispositif de réglage longitudinal (10), relié à la partie formant l'assise (3), selon l'une des revendications précédentes.
